# EUROPEAN PATENT APPLICATION

(11) **EP 2 400 699 A1**
(43) Date of publication of application: **28.12.2011**
(21) Application number: 10743575.2
(22) Date of filing: 18.02.2010
(51) Int. Cl.: H04L 12/46, H04L 12/56

(54) **NETWORK SECURITY SYSTEM AND REMOTE MACHINE QUARANTINE METHOD**

(30) Priority: 19.02.2009 JP 2009036512
(71) Applicant: NEC Corporation, Tokyo 108-8001 (JP)
(72) Inventor: ONUMA, Hiroaki, Tokyo 108-8001 (JP)
(74) Representative: Glawe, Delfs, Moll
(86) International application number: PCT/JP2010/001064
(87) International publication number: WO 2010/095446

(57) **Abstract**

In a thin client system in which clients are connected to remote machines via a network so as to implement transactions, a remote machine infected with a virus is isolated from the network in response to a user's instruction on each client whilst communication settings minimally required for transactions are maintained. That is, a request issue agent issues an isolation request in response to a user input, so that a request execute agent changes communication settings of the remote machine in response to the isolation request. In an isolated state of a remote machine isolated from the network, a management server is allowed to change network settings regarding the remote machine with reference to a disconnection setting file, which stores communication settings minimally required for the remote machine in advance.

## Description

### BACKGROUND OF THE INVENTION

### Field of the Invention

The present invention relates to network security systems, and in particular to remote machine isolation methods that isolate remote machines (remote computers), likely infected with a computer virus via clients, from networks in thin client systems.
The present application claims priority on Japanese Patent Application No. 2009-36512 filed February 19, 2009, the entire content of which is incorporated herein by reference.

### Description of the Related Art

Recently, thin client systems, i.e. client server systems with limited functions of clients, have been used in networks. In thin client systems, clients are connected to remote machines via networks, so that users of clients remotely control remote machines to implement various types of processing.

Meanwhile, there occurs a problem in that computer viruses (hereinafter, simply referred to as "virus") prevail via networks, e.g. the Internet, to cause information leakage from machines in networks. When machines involved in networks are suspected to be infected with a virus, those machines need to be isolated from networks. Thus, it is possible to prevent the virus from prevailing in networks since other machines are likely to be infected with the virus via networks.

Various technologies regarding thin clients systems and antivirus/security measures have been developed; for example, Patent Document 1 disclose a technology for isolating machines which are suspected to be infected with a virus from networks. This technology is designed to logically disconnect a specific host computer from a network in response to a command manually made by an administrator or a command automatically started.

### PRIOR ART DOCUMENTS

### PATENT DOCUMENTS

Patent Document 1: Japanese Patent Application Publication No. 2007-129707
Patent Document 2: Japanese Patent Application Publication No. 2005-333372
Patent Document 3: Japanese Patent Application Publication No. 2007-133666
Patent Document 4: Japanese Patent Application Publication No. 2007-226822

### SUMMERY OF THE INVENTION

### PROBLEM TO BE SOLVED BY THE INVENTION

The conventional technology of Patent Document 1 may demonstrate a high quality of security in an aspect of preventing virus prevalence, but it suffers from the following problem when applied to environments of thin client systems in which clients remotely control remote machines.

The thin client system differs from the conventional computer system, which allows users to directly control machines, in that clients need to conduct communication, ensuring remote control on remote machines, via the network. For this reason, when the administrator completely disconnects remote machines from the network, clients are unable to implement any operation and snuffer from problems with processing. Therefore, it is necessary not to completely disconnect communication with remote machines, whilst it is necessary to selectively disconnect unnecessary communication while securing minimum communication required for operations of clients.

Even when virus detecting software is installed in machines, there occurs a situation that new kinds of virus are not completely detected. Even in this situation, users may recognize that machines are infected with a virus. Since clients are connected to remote machines in the thin client system, it is difficult for users to physically isolate clients from the network by pulling out network cables even though users recognize warnings from virus detecting software or suspicious computer operation due to a virus.

Additionally, users of clients may not be granted an administrator authority in terms of security irrespective of installation of the thin client system. For this reason, users having no administrator authority are unable to manipulate clients and change connection settings on remote machines infected with a virus and unable to logically isolate those remote machines from the network. In this case, users need to request the administrator of remote machines, infected with a virus, to conduct an isolation operation. This takes a long time until remote machines are actually isolated from the network after users notice the virus infection; hence, the virus may prevail in the network in this time period.

The present invention is made under the aforementioned circumstances, wherein the object thereof is to provide, a network security system, which allows a user to manipulate his/her client without an authorization of a system administrator so that remote machines infected with a virus will be rapidly isolated from a network.

### MEANS OF SOLVING THE PROBLEM

The present invention relates to a network security system in which a client is connected to a remote machine via a network so as to implement transactions, including a request issue agent issuing an isolation request for isolating the remote machine from the network in response to a user's instruction via the client, and a request execute agent for changing the communication setting of the remote machine in response to the isolation request.

The present invention provides a remote machine isolation method applied to a network security system in which a client is connected to a remote machine via a network so as to implement transactions, including a step of issuing an isolation request for isolating the remote machine from the network in response to a user's instruction via the client and a step of changing the communication setting of the remote machine in response to the isolation request.

The present invention is applied to a thin client system in which the user of a client is not granted an administrator authorization and unable to logically invalidate network settings. When the user, who remotely controls the remote machine, notice that the remote machine is infected with a virus, the user manually issues an isolation request for a management module, thus isolating the remote machine from the network. The isolation request is issued by the client or the remote machine. Additionally, it is possible to completely isolate the remote machine from the network, and it is possible to maintain communication settings (e.g. settings regarding ports and counterpart correspondents) minimally required for transactions depending upon the user's decision.

Thus, when the remote machine is suspected to be infected with a virus in the thin client system, it is possible to isolate the remote machine from the network, depending upon the user's decision via the client, without an administrator' authorization, and to limit its communication.

### EFFECT OF THE INVENTION

The present invention makes it possible to change network settings regarding the remote machine upon user's operation on the client, whereby it is possible to reliably prevent prevalence of a virus infection, and it is possible to improve a quality of antivirus security.

### BRIEF DESCRIPTION OF THE DRAWING

[Fig. 1] A block diagram showing the constitution of a thin client system corresponding to a network security system according to a preferred embodiment of the present intention.
[Fig. 2] A block diagram of the network security system including constituent elements used in a first operation mode.
[Fig. 3] A block diagram illustrating an isolation process for isolating a remote machine from a network in the first operation mode.
[Fig. 4] A block diagram illustrating a communication state of the remote machine after implementing the isolation process in the first operation mode.
[Fig. 5] A block diagram of the network security system including constituent elements used in a second operation mode.
[Fig. 6] A block diagram illustrating an isolation process for isolating the remote machine from the network in a second operation mode.

### MODE FOR CARRYING OUT THE PRESENT INVENTION

As a network security system according to a preferred embodiment of the present invention, a thin client system will be described in detail with reference to the accompanying drawings.
The network security system of the present embodiment enables the user of a client to isolate a remote machine, located in a remote place, from a network. Wherein, the term "isolate" does not necessarily indicate that the remote machine is disconnected from the network by completely disconnecting communication but embraces the concept that the remote machine is partly disconnected from the network while communication is partly maintained.

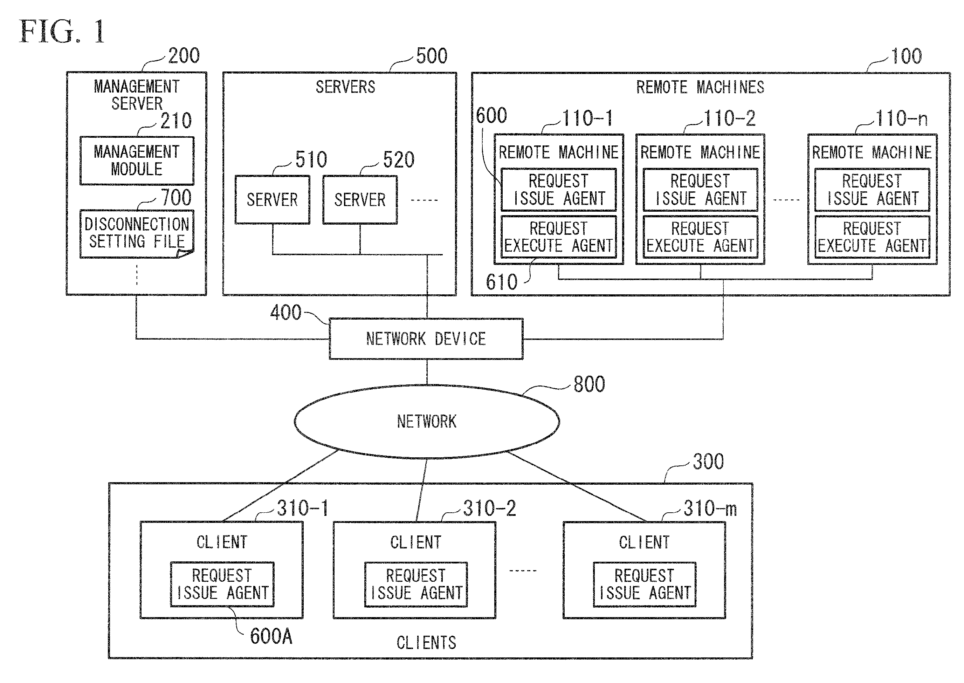

Fig. 1 is a block diagram showing the constitution of a thin client system of the present embodiment. The thin client system includes remote machine 100, a management server 200, clients 300, a network device 400, servers 500, and a networks 800. The clients 300 are connected to the network device 400 via the network 800, which is further connected to the remote machines 100, the management server 200, and the servers 500.

The remote machines 100 includes a plurality of remote machine 110-1, 110-2, ..., 110-n (where n denotes a natural number) implementing various processes. The remote machines 100 do not necessarily indicate a plurality of remote machines but may indicate a single remote machine. For the sake of convenience in explanation, each remote machine will be specifically referred to as a "remote machine 110".

The remote machine 110 is remotely controlled by each client among the clients 300; hence, the user of each client is able to operate the remote machine 110 like his/her computer. For instance, the remote machine 110 can be configured using a general-purpose personal computer (PC), a virtual machine (VM) embodied using virtual software (e.g. VMware ESX (a registered trademark) of Vmware company), or one blade of a blade server.

The remote machine 110 includes a request issue agent 600 and a request execute agent 610. The request issue agent 600 issues an isolation request that requests a management module 210 of the management server 200 to isolate a specific remote machine 110 from the network 800. The request execute agent 610 changes network settings of the remote machine 110 in response to a request from the management module 210.

The management server 200 implements the function of the management module 210. A program for managing the remote machine 110 and the network device 400 is installed in the management module 210, which is therefore able to change network settings between the remote machine 110 and the network device 400.

The management server 200 stores a disconnection setting file 700 having communication disconnecting information, representing communication settings which need to be maintained in an isolated state of the remote machine 110. The disconnection setting file 700 is used to store continuing communication settings (e.g. settings specifying ports and counterpart correspondents) or disconnected communication settings with respect to the remote machine 110 isolated from the network 800. For instance, the disconnection setting file 700 may save communication settings minimally required for transactions.

Since the disconnection setting file 700, which is prepared in advance with respect to predetermined transactions, is adopted to isolate the remote machine 110 from the network 800, it is possible to continuously perform predetermined transactions while omitting user's time and labor to select continuing communication settings. That is, the management server 200 may provide a plurality of disconnection setting files 700 for use in continuing transactions. In this connection, the user may select and designate continuing communication settings for the management module 210 without using the disconnection setting file 700.

The clients 300 include a plurality of clients 310-1, 310-2, ..., 310-m (where m denotes a natural number). The clients 300 do not necessarily indicate a plurality of clients but may indicate a single client. For the sake of convenience in explanation, each client will be specifically referred to as a "client 310".

The user operates the client 310 to remotely control the remote machine 110 via the network 800, e.g. the Internet. The client 310 is configured of a thin client having no storage device such as a hard-disk unit or a general-purpose personal computer (PC). The client 310 includes a request issue agent 600A which is equivalent to the request issue agent 600.

The network device 400 has the function of an L2 switch or an L3 switch controlling the network 800 as well as a firewall function, wherein the management module 210 is able to change network settings with the network device 400.

The servers 500 are business-use servers operating with the network 800, e.g. file servers for storing business-use files via FTP (File Transfer Function) and WEB servers implementing WEB browser-based transactions, which are able to communicate with clients via specific ports. Fig. 1 shows two servers 510, 520 as the servers 500, whereas the number of servers can be arbitrarily determined; hence, it is possible to include two or more servers.

The network security system of the present invention includes the request issue agent 600 and the request execute agent 610 of the remote machine 110, the management module 210 of the management server 200, and the request issue agent 600A of the client 310.

Fig. 1 shows that the client 310 is equipped with the request issue agent 600A, having the same function as the request issue agent 600 of the remote machine 110, whereas it is possible to utilize one of the request issue agents 600 and 600A while disusing the other in response to the operation mode of the network security system. Alternatively, it is possible to omit the request execute agent 610 of the remote machine 110 owing to the isolation method of the remote machine 110.

Next, the isolation method of the remote machine 110 adopted in the network security system will be described.
The following description refers to a first operation mode in which the request issue agent 600A of the client 310 is used to isolate the remote machine 110 from the network 800 and a second operation mode in which the request issue agent 600 of the remote machine 110 is used to isolate the remote machine 110 from the network 800.

### (1) First operation mode

The first operation mode of the network security system will be described in detail with reference to Figs. 1 to 4.
In the first operation mode, when the user notices a virus infection, the user operates the request issue agent 600A of the client 310 to issue an isolation request, whereby the management server 200 changes network setting of the network device 4000 in response to the isolation request, thus isolating the specific remote machine 110 from the network 800.

The first operation mode does not utilize the request issue agent 600 and the request execute agent 610 of the remote machines 110. That is, it is possible to preclude the request issue agent 600 and the request execute agent 610 from the remote machine 110 with respect to the first operation mode.

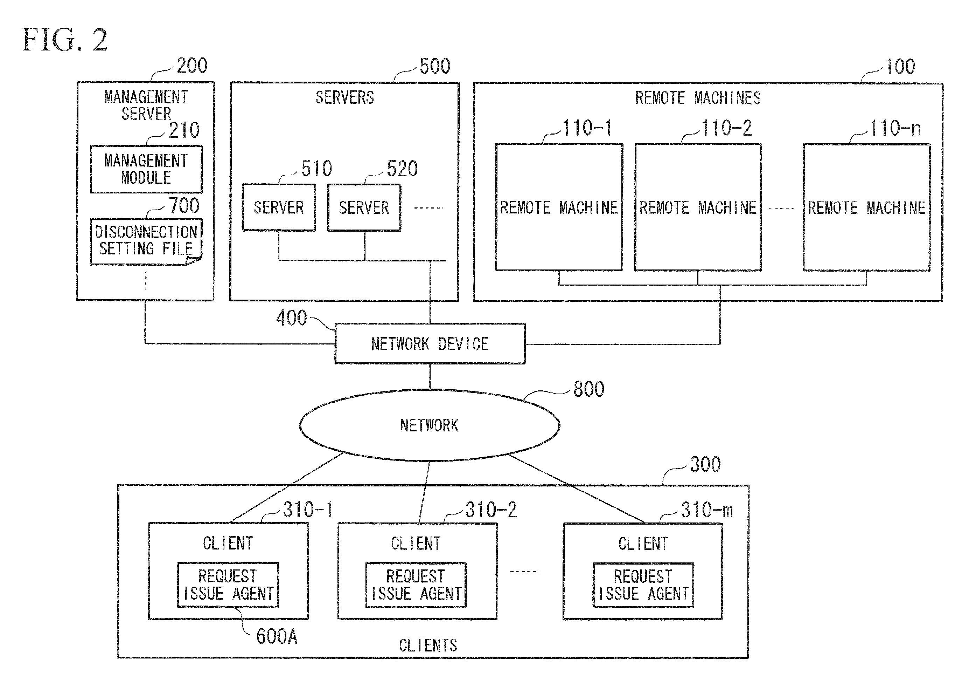

Fig. 2 is a block diagram showing the constitution precluding the request issue agent 600 and the request execute agent 610 from the remote machine 110. Other constituent elements are identical to those shown in Fig. 1.

The first operation mode will be described with reference to Fig. 2. The following description is based on the precondition that the user has already connected the client 310-1 to the remote machine 110-1 in order to implement transactions. To remotely control the remote machine 110-1, the user starts communication from the client 310-1 to the remote machine 110-1 in accordance with a remote connection protocol P1 (e.g. RDP: Remote Desktop Protocol). That is, the user operates the client 310-1 to remotely control the remote machine 110-1, thus implementing various transactions.

Now, consideration, is given to the situation in which the remote machine 110-1 is infected with a virus during the connected state established between the client 310-1 and the remote machine 110-1. When the user receives warning from virus detecting software or when the user notices a suspicious operation due to a virus infection of the remote machine 110-1, for example, the user decides to isolate the remote machine 110-1 from the network 800. Even when the remote machine 110-1 is isolated from the network 800, the user may decide to maintain communication according to the remote connection protocol P1 and the file transfer protocol P2 with the server 510 since it is necessary to maintain processing minimally required for transactions.

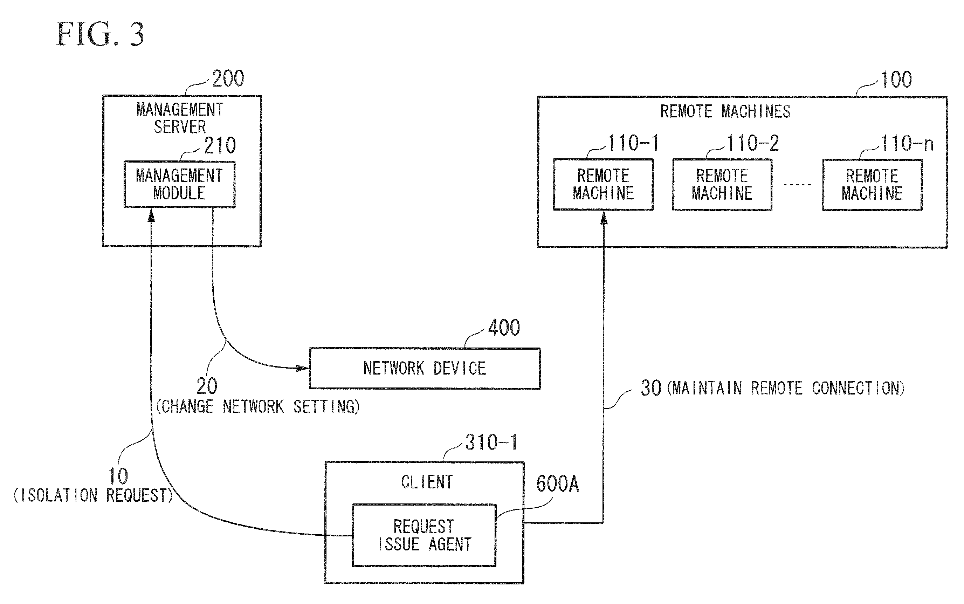

In this case, the user inputs communication settings for continuing remote connection (e.g. setting regarding ports and counterpart correspondents) into the client 310-1 and the request issue agent 600A. In response to the user's input, the request issue agent 600A designates communication settings for continuing remote connection for use in the management module 210 of the management server 200 while issuing an isolation request (see "10" in Fig. 3) to isolate the remote machine 110-1 from the network 800. As the communication settings for continuing remote control, the user designates the remote connection protocol P1 and the protocol P2 used for communication with the server 510.

To isolate the remote machine 110-1 from the network 800 in response to the isolation request of the request issue agent 600A, the management module 210 changes communication settings of the remote machine 110-1 (see "20" in Fig. 3). That is, the management module 210 makes a decision as to which remote machine 110-1 should be isolated from the network 800 based on the isolation request (in other words, the management module 210 decides to isolate a specific remote machine 110-1 from the network 800) and then changes network settings to discard unnecessary setting while maintaining minimally required communication settings.

This network setting change process can be arbitrarily made as long as it can maintain communication settings designated by the user, wherein the first operation mode changes network settings of the network device 400 so as not to allow for disconnected packets flowing through the network 800. After completion of the network setting change process, it is necessary to maintain remote connection established between the client 310-1 and the remote machine 110-1 (see "30" in Fig. 3).

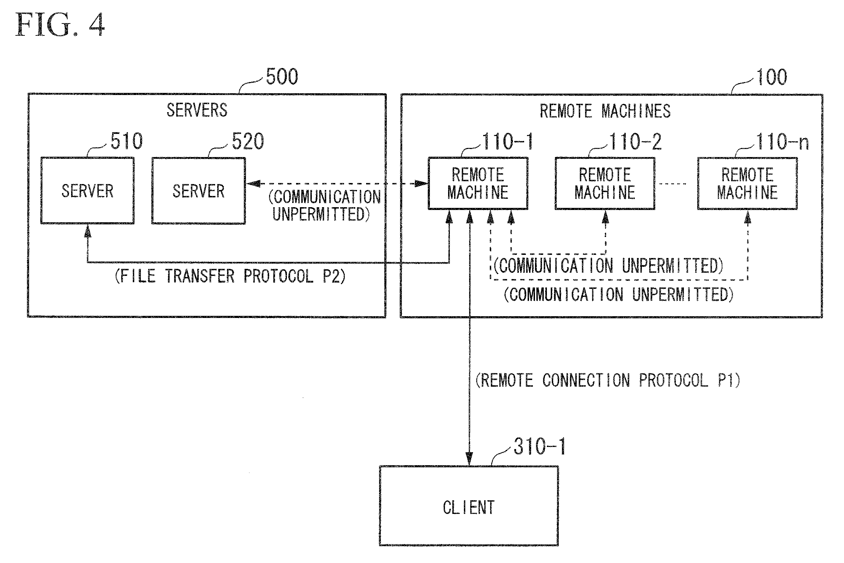

Fig. 4 shows the communication state of the remote machine 110-1 after being isolated from the network 800 in response to the user's isolation request. The first operation mode allows the remote machine 110-1 to continue communication with the client 310-1 using the remote connection protocol P1 and communication with the server 510 using the file transfer protocol P2 while nullifying other communication.
Therefore, it is possible to effectively isolate the remote machine 110-1, infected with a virus, from the network 800 while maintaining minimally required communication settings designated by the user, thus preventing prevalence of the virus.

In the first operation mode, the management server 200 does not utilize the disconnection setting file 700 in the isolation process of the remote machine 110. Like the second operation mode, the management server 200 may change network settings to maintain communication setting, described in the disconnection setting file 700, with reference to the disconnection setting file 700 in response to the user's isolation request.

### (2) Second operation mode

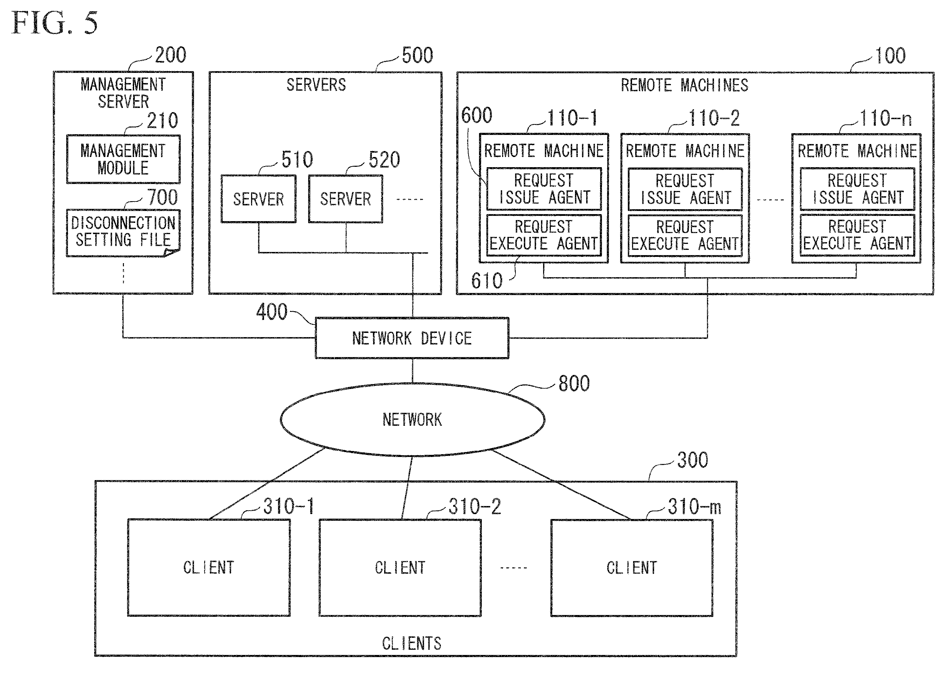

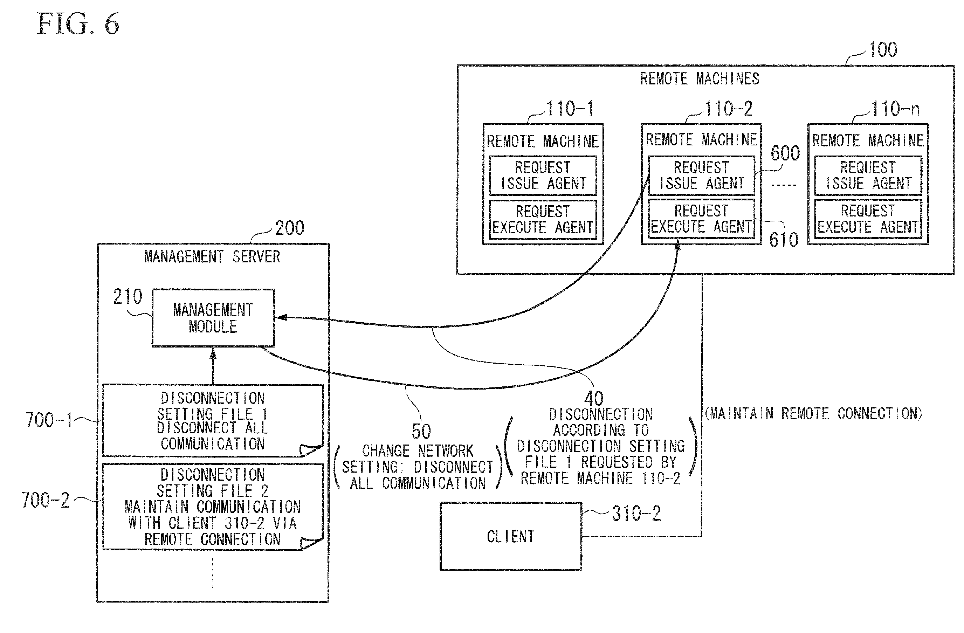

The second operation mode of the network security system will be described with reference to Figs. 5 and 6.
In the second operation mode, the user of the client 310 manipulates the request issue agent 600 of the remote machine 110 so as to issue an isolation request for isolating the remote machine 110 from the network 800. The second operation mode does not utilize the request issue agent 600A of the client 310. That is, it is possible to preclude the request issue agent 600A from the client 310 connected to the network security system in response to the second operation mode.

As shown in Fig. 6, the management server 200 comprises the disconnection setting file 700 including two disconnection setting files 700-1 and 700-2. The disconnection setting file 700-1 (or "disconnection setting file 1") describes that all communications are disconnected (i.e. no communication setting for continuing remote connection exists in the isolated state of the remote machine 110). The disconnection setting file 700-2 (or "disconnection setting file 2") describes that, for example, remote connection with the client 310-2 is maintained (i.e. communication with the client 310-2 is maintained in the isolated state of the remote machine 110). In this connection, the content and the number of disconnection setting files stored in the management server 200 are not necessarily limited to those shown in Fig. 6.

Fig. 5 is a block diagram showing the constitution in which the request issue agent 600A is precluded from the client 310 in the network security system. Other constituent elements are identical to those shown in Fig. 1.

In the second operation mode, for example, when the user of the client 310-2 notices a warning from virus detecting software while remote control with the remote machine 110-2 is in progress, or when the user of the client 310-2 notices suspicious operation of the remote machine 110-2 due to a virus infection, the user decides to completely isolate the remote machine 110-2 from the network 800. In this case, the user of the client 310-2 designates the disconnection setting file 700-1 of the management server 200 and manipulates the request issue agent 600 of the remote machine 110-2 to spend an isolation request for isolating the remote machine 110-2 from the network 800 to the management module 210 (see "40" in Fig. 6).

Upon receiving the isolation request, the management server 200 operates the management module 210 to change network settings with the request execute agent 610 with reference to the disconnecting setting file 700-1, thus completely disconnecting communication with the remote machine 110-2 (see "50" in Fig. 6). That is, the request execute agent 610 changes its network settings so as to completely isolate the remote machine 110-2 from the network 800, thus preventing virus prevalence.

The second operation mode differs from the first operation mode in terms of three points as follows.
The first difference indicates that the request issue agent 600 of the remote machine 110 issues an isolation request for isolating the remote machine 110 from the network 800 (i.e. "40" in Fig. 6). In the network security system, an isolation request of the remote machine 110 can be issued by the request issue agent 600A of the client 310 in accordance with the first operation mode, whilst it can be issued by the request issue agent 600 of the remote machine 110 in accordance with the second operation mode.

The second difference indicates that the remote machine 110-2 is completely isolated from the network 800 without continuing remote control with the remote machine 110-2. In this isolation process, the user of the client 310-2 is not allowed to manipulate the remote machine 110-2 via remote connection unless an administrator restores original communication settings of the remote machine 110-2. This ensures the second operation mode to demonstrate a higher virus prevalence preventing effect than the first operation mode.

The third difference indicates that the user of the client 310-2 designates the disconnection setting file 700-1 of the management server 200 to isolate the remote machine 110-2 from the network 800. The first operation mode allows each user to individually designate communication settings for continuing remote connection, whilst the second operation mode prepares in advance the disconnection setting file 700-2, which collectively describe communication settings for continuing remote control, in the management server 200 so that the user of the client 310 can designate the desired content of the disconnection setting file 700 when issuing an isolation request.

That is, the management module 210 reads and refers to the desired content of the disconnection setting file 700 designated by an isolation request, thus determining an isolation method as to how to isolate the remote machine 110 from the network 800 (see "40" in Fig. 6). Although an isolation process can be arbitrarily determined, the management module 210 instructs the request execute agent 610 of the remote machine 110-2 to change network settings regarding the remote machine 110-2 (see "50" in Fig. 6), thus completely isolating the remote machine 110-2 from the network 800 as shown in Fix. 6.

The present embodiment demonstrates the following effects.
The first effect indicates that, in the computer system, such as the thin client system whose execution environment is not located close to the user but in a remote place, in which a suspicious machine possibly infected with a virus cannot be isolated from the network by pulling out a LAN (Local Area Network) cable, the user of each client is allowed to immediately isolate such a machine at his/her decision by issuing an isolation request to the management module; this makes it possible to effectively prevent virus prevalence.

The second effect indicates that the user of each client, not necessarily a system administrator, is allowed to determine communication settings for continuing remote connection; hence, it is possible to continuously implement transactions while maintaining communication settings minimally required for transactions (e.g. setting regarding ports and counterparts correspondents).

The effect indicates that the system is able to automatically isolate a specific remote machine after an isolation request of the specific remote machine is issued by the user; hence, it is possible to reduce load to an administrator.

The network security system and the remote machine isolation method of the present invention are not necessarily limited to the foregoing embodiments, which can be modified in various ways.

The first operation mode describes that communication settings of the remote machine are limited by changing network settings of the network device 400, whereas it is possible to appropriately change communication settings of the remote machine 110 in addition to network settings of the network device 400 in response to an isolation method. Additionally, it is possible to change communication settings by starting the request execute agent 610.

The second operation mode describes that the request execute agent 610 of the remote machine 110 is allowed to change its communication settings; but this is not a restriction. That is, the management module 210 is redesigned to change network settings of the network device 400 and communication settings of the remote machine 110, thus isolating the remote machine 110 from the network 800.

The operation of the network security system of the present embodiment is described differently with respect to the first operation mode and the second operation mode. For instance, each of the user of the client 310-1 remotely connected to the remote machine 110-1 and the user of the client 310-2 remotely connected to the remote machine 110-2 is allowed to independently manage the network security system. That is, the user A of the client 310-1 is allowed to isolate the remote machine 110-1 from the network 800 in accordance with the first operation mode, whilst the user B of the client 310-2 is allowed to isolate the remote machine 110-2 from the network 800 in accordance with the second operation mode. Moreover, the remote machine isolation method is not necessarily limited to the present embodiment; hence, the user of the client 110 is allowed to change the remote machine isolation method upon his/her demand.

### INDUSTRIAL APPLICABILITY

The present invention is applicable to network computing in which clients are connected to remote machines via networks so as to implement transactions and demonstrates a significant effect when applied to thin client systems in which users of clients are not granted an administrator authority. Additionally, users of clients are allowed to arbitrarily isolate remote machines from networks without an administrator's authorization and also allowed to implement desired communication settings and isolation methods; hence, it is possible to demonstrate a high antivirus security effect, and it is possible to achieve network computing with a high degree of freedom.

### DESCRIPTION OF THE REFERENCE NUMERALS

- 100: Remote machines
- 110: Remote machine
- 200: Management server
- 210: Management module
- 300: Clients
- 310: Client
- 400: Network device
- 500: Servers
- 600: Request issue agent
- 600A: Request issue agent
- 610: Request execute agent
- 700: Disconnection setting file
- 800: Network

## Claims

1. A network security system in which a client is connected to a remote machine via a network so as to implement transactions, said network security system comprising:
a request issue agent that issues an isolation request for isolating the remote machine from the network in response to a user's instruction on the client; and
a request execute agent that changes communication settings of the remote machine in response to the isolation request.

2. The network security system according to claim 1, wherein in an isolated state of the remote machine isolated from the network, the request execute agent changes the communication settings of the remote machine with reference to a disconnection setting file, which stores communication settings minimally required for the remote machine in advance.

3. The network security system according to claim 1, wherein the request execute agent is installed in the remote machine.

4. The network security system according to claim 1, wherein the request execute agent changes network settings of the network device connected between the remote machine and the network, thus changing the communication settings of the remote machine.

5. the network security system according to claim 1, wherein the request issue agent is installed in the client or in the remote machines.

6. A remote machine isolation method applied to a network security system in which a client is connected to a remote machine via a network so as to implement transactions, said remote machine isolation method comprising:
issuing an isolation request for isolating the remote machine from the network in response to a user's instruction on the client; and
changing communication settings of the remote machine in response to the isolation request.

7. The remote machine isolation method according to claim 6, wherein in an isolated state of the remote machine isolated from the network, the communication settings of the remote machine are changed with reference to a disconnection setting file, which stores communication settings minimally required for the remote machine in advance.
